# EUROPEAN PATENT APPLICATION

(11) **EP 4 324 876 A1**
(43) Date of publication of application: **21.02.2024**
(21) Application number: 22807613.9
(22) Date of filing: 29.03.2022
(51) Int. Cl.: C08L 19/00, C08L 67/02, C08K 5/14

(54) **BIODEGRADABLE RUBBER COMPOSITION**

(30) Priority: 12.05.2021 KR 20210061167
(71) Applicant: Lee, Sung Yull, Busan 47732 (KR)
(72) Inventor: Lee, Sung Yull, Busan 47732 (KR)
(74) Representative: Prüfer & Partner mbB Patentanwälte · Rechtsanwälte
(86) International application number: PCT/KR2022/004455
(87) International publication number: WO 2022/239965

(57) **Abstract**

Provided is a biodegradable rubber composition which includes biodegradable materials instead of some rubber components to achieve high biodegradation efficiency. The biodegradable rubber composition includes a polyalkylene succinate adipate (PASA) resin, a peroxide crosslinking agent, and a rubber capable of being crosslinked by the peroxide crosslinking agent.

## Description

### Technical Field

The present invention relates to a biodegradable rubber composition, and more specifically to a biodegradable rubber composition which includes biodegradable materials instead of some rubber components to achieve high biodegradation efficiency.

### Background Art

Synthetic plastics are generally used in various applications across the world. For example, synthetic plastics are used as packaging materials indispensable to modern people's lives due to their excellent physical properties, cheapness, and light weight. However, synthetic plastics are hardly degraded, which is both an advantage and a disadvantage, and their use causes environmental pollution problems that are becoming more and more serious. Under these circumstances, countries around the world have recently made efforts to find solutions to the problems caused by synthetic plastics. Many methods, mainly landfill, incineration, and recycling, have been utilized to dispose of synthetic plastics but failed to completely solve the environmental pollution problems. Therefore, attention is currently being focused on the development of so-called degradable plastics that are made self-degradable when discarded after use.

Many types of degradable plastics have been developed from various raw materials based on various technologies. Particularly, polylactic acid (hereinafter abbreviated as "PLA") is produced on a large scale at low cost by L-lactic acid fermentation. PLA is rapidly degraded under composting conditions and has good resistance to mold and resistance to exploitation for food. Due to these advantages, the applicability of PLA is extended to a wide variety of fields. Numerous attempts have been made to impart PLA with suitable characteristics depending on the intended use in countries around the world.

Biodegradable polymers, including PLA, correspond to rigid polymers that can be used as structural and exterior materials. However, only a few studies have been conducted on the biodegradability of highly elastic rubbers.

Disposal of molded products such as car tires and shoe soles adversely affects the global environment due to the presence of rubber components in the molded products. In attempts to solve this problem, studies have been continuously conducted to impart biodegradability to molded articles made of rubber compositions by replacing some components of the rubber compositions with biodegradable materials. For example, techniques for incorporating biodegradable materials into rubber have been reported in the literature. As these biodegradable materials, there can be exemplified biofillers such as polysaccharides of vegetable origin, including starch and cellulose (Korean Patent Nos. 10-0674670 and 10-0721443 and Korean Patent Publication No. 10-2014-0065615) and polysaccharides of animal origin, including chitin and chitosan (Korean Patent Publication No. 10-1997-0042722 and Korean Patent No. 10-0271832) and biodegradable plastics, including polyhydroxybutylene, polylactate, and polycaprolactone (Japanese Patent Publication No. 2007- 224253).

However, the above biodegradable materials have the problem of low biodegradation efficiency. Thus, there is a need to develop a technique for enhancing the biodegradability of rubber compositions.

### Detailed Description of the Invention

### Problems to be Solved by the Invention

The present invention has been made in an effort to solve the above-described problems and is intended to provide a biodegradable rubber composition which includes biodegradable materials instead of some rubber components to achieve high biodegradation efficiency.

### Means for Solving the Problems

According to one aspect of the present invention, there is provided a biodegradable rubber composition including a polyalkylene succinate adipate (PASA) resin, a peroxide crosslinking agent, and a rubber capable of being crosslinked by the peroxide crosslinking agent.

In one embodiment, the polyalkylene succinate adipate (PASA) resin may be a polybutylene succinate adipate (PBSA) resin.

In one embodiment, the crosslinkable rubber may be selected from the group consisting of natural rubber (NR), styrene butadiene rubber (SBR), butadiene rubber (BR), styrene butadiene styrene (SBS) rubber, nitrile-butadiene rubber (NBR), ethylene-propylene rubber (EPM), ethylene propylene diene monomer (EPDM) rubber, silicone rubber, styrene block copolymer (SBC), 1,2-polybutadiene (1,2-PB), chlorinated polyethylene (CPE), ethylene vinyl acetate rubber (EVM), thermoplastic polyurethane (TPU) elastomer, and mixtures thereof.

In one embodiment, the polyalkylene succinate adipate resin and the crosslinkable rubber may be present in a weight ratio of 80:20 to 30:70.

In one embodiment, the biodegradable rubber composition may further include a compatibilizer.

In one embodiment, the compatibilizer may be a maleic anhydride (MAH)-grafted rubber.

### Effects of the Invention

The biodegradable rubber composition of the present invention is designed to have physical properties equal to or greater than those of existing rubbers while possessing biodegradability that is not present in existing rubbers. Therefore, the biodegradable rubber composition of the present invention can be disposed of with minimal environmental impact.

### Mode for Carrying out the Invention

Preferred embodiments of the present invention will now be described in detail. In the description of the present invention, detailed explanations of related art are omitted when it is deemed that they may unnecessarily obscure the essence of the present invention. Throughout the specification, the singular forms "a", "an" and "the" are intended to include the plural forms as well, unless the context clearly indicates otherwise. In the present invention, it is to be understood that the terms such as "including" or "having," etc., are intended to indicate the existence of the features, numbers, steps, operations, actions, components, parts, or combinations thereof disclosed in the specification, and are not intended to preclude the possibility that one or more other features, numbers, steps, operations, actions, components, parts, or combinations thereof may exist or may be added. Respective steps of the methods described herein may be performed in a different order than that which is explicitly described. In other words, the respective steps may be performed in the same order as described, substantially simultaneously, or in a reverse order.

The present invention is not limited to the illustrated embodiments and may be embodied in various different forms. Rather, the disclosed embodiments are provided so that this disclosure will be thorough and complete, and will fully convey the scope of the invention to those skilled in the art. In the drawings, the dimensions, such as widths and thicknesses, of elements may be exaggerated for clarity. The drawings are explained from an observer's point of view. It will be understood that when an element is referred to as being "on" another element, it can be directly on the other element, or one or more intervening elements may also be present therebetween. It will be understood by those skilled in the art that various changes in form and details may be made therein without departing from the spirit and scope of the invention as defined by the appended claims. The same reference numerals represent substantially the same elements throughout the drawings.

A biodegradable rubber composition according to one aspect of the present invention includes a polyalkylene succinate adipate (PASA) resin, a peroxide crosslinking agent, and a rubber capable of being crosslinked by the peroxide crosslinking agent.

The crosslinkable rubber may be selected from the group consisting of natural rubber (NR), styrene butadiene rubber (SBR), butadiene rubber (BR), styrene butadiene styrene (SBS) rubber, nitrile-butadiene rubber (NBR), ethylene-propylene rubber (EPM), ethylene propylene diene monomer (EPDM) rubber, silicone rubber, styrene block copolymer (SBC), 1,2-polybutadiene (1,2-PB), chlorinated polyethylene (CPE), ethylene vinyl acetate rubber (EVM), thermoplastic polyurethane (TPU) elastomer, and mixtures thereof. When the crosslinkable rubber is mixed with the high-hardness PASA resin, the hardness of the mixture can be adjusted to a value required for a rubber due to the inherently low hardness of the crosslinkable rubber. Particularly, the crosslinkable rubber can be co-crosslinked with the PASA resin when crosslinked by the peroxide.

The rubbers listed above are those that can be crosslinked by peroxides and are thus suitable for use in the biodegradable rubber composition of the present invention. When considering both versatility and price, the crosslinkable rubber may be, for example, selected from styrene butadiene rubber (SBR), butadiene rubber (BR), styrene butadiene styrene (SBS) rubber, and ethylene propylene diene monomer (EPDM) rubber.

Styrene butadiene rubber (SBR) is composed of a copolymer of styrene and butadiene and is produced by emulsion polymerization or solution polymerization. The physical properties of SBR can be determined by varying the contents of styrene and butadiene, enabling the production of SBR with various physical properties. The biodegradable rubber composition of the present invention may use SBR whose styrene content is in the range of 20 to 30% by weight. Within this range, the SBR may have appropriate physical properties. Meanwhile, outside this range, the physical properties of the biodegradable rubber composition using the SBR may deteriorate.

Butadiene rubber (BR) is produced by polymerization of butadiene and its physical properties may vary depending on the content of the cis-component. Here, it is preferable that the biodegradable rubber composition uses a high-cis butadiene rubber with good wear resistance. It is more preferable that the content of the cis-component in the high-cis butadiene rubber is at least 90%. If the content of the cis-component is lower than 90%, the high-cis butadiene rubber is highly elastic but may exhibit poor wear resistance. Thus, the biodegradable rubber composition may also use a mixture of two or more types of butadiene rubbers to adjust the content of the cis-component to an appropriate level.

Styrene butadiene styrene (SBS) rubber refers to a block copolymer that is produced by polymerization of styrene and butadiene in an organic solvent. SBS rubber is a thermoplastic elastomer that has high elasticity even without vulcanization and good recoverability from deformation on account of its molecular structure. SBS is widely used in various applications such as asphalt modifiers, adhesives, and pressure-sensitive adhesives and its use is currently increasing in products such as shoe soles and tires where good wear resistance is required. Currently commercially available SBS products have various physical properties depending on the content of styrene, the presence or absence of oil, and viscosity. It is preferable that the biodegradable rubber composition of the present invention uses a SBS product with good wear resistance, specifically an oil-free SBS product whose styrene content is in the range of 20 to 23% by weight. Within this range, the SBS product has an appropriate viscosity and elasticity and is suitable for use as a rubber. Meanwhile, outside this range, the SBS product cannot be produced by polymerization or has high hardness, making it difficult to use as a rubber.

Ethylene propylene diene monomer (EPDM) rubber is produced by polymerization of ethylene and propylene and is known to have good durability against sunlight, especially ultraviolet light and ozone. EPDM rubber is also known to have good storage stability, cold resistance, heat resistance, and solvent resistance. Due to these advantages, EPDM rubber is used in many applications, such as road paving materials, flooring materials, building interior and exterior materials, automobile interior and exterior materials, and heat-resistant materials. EPDM rubber is mainly produced by copolymerizing a diene with an ethylene propylene monomer (EPM), followed by vulcanization. EPDM rubber products with different diene contents are commercially available. It is preferable that the biodegradable rubber composition of the present invention uses a highly durable and wear-resistant EPDM rubber product whose diene content is 3 to 6% by weight.

The polyalkylene succinate adipate (PASA) resin is a synthetic, petroleum-based aliphatic polyester and is produced by polycondensation and subsequent chain extension with polyfunctional isocyanates. The PASA resin is a combination of an alkanediol, succinic acid, and adipic acid. Most of the monomers are synthesized from petroleum but may also be obtained from biologically derived feedstocks.

The alkanediol may be, for example, 1,2-ethanediol, 1,3-propanediol or 1,4-butanediol from which various PASA resins can be produced. Particularly, 1,4-butanediol is produced on the largest scale at low cost and has excellent physical properties. Accordingly, the PASA resin is more preferably a polybutylene succinate adipate (PBSA) resin.

The PBSA resin may be produced from 35 to 55% by weight of 1,4-butanediol, 40 to 60% by weight of succinic acid, 1 to 20% by weight of adipic acid, and 0.1 to 10% by weight of a catalyst and an additive. Within these content ranges, smooth synthesis of the PBSA resin can be ensured. Meanwhile, outside these content ranges, desired physical properties may not be obtained or poor biodegradability may be caused.

At least one of 0.5 to 10% by weight of propylene glycol, 0.5 to 15% by weight of diethylene glycol, and 0.1 to 2% by weight of tetrahydrophthalic anhydride may be used to produce the PBSA resin. Here, the propylene glycol is added due to its outstanding ability to increase the crystallinity of the polymer compared to 1,4-butanediol. The diethylene glycol is added to increase the elongation of the polymer and the tetrahydrophthalic anhydride is added to moderate crystal formation due to its ability to tilt (or distort) the molecular structure of the polymer.

The crosslinkable rubber and the PASA resin may be present in a weight ratio of 80:20 to 30:70, preferably 73:27 to 35:65, more preferably 70:30 to 40:60. If the content of the PASA resin is lower than the lower limit, the biodegradability of the biodegradable rubber composition may be insignificant. Meanwhile, if the content of the PASA resin exceeds the upper limit, the hardness of the biodegradable rubber composition may increase, losing its function as a rubber.

The peroxide crosslinking agent is used for appropriate co-crosslinking of the PASA resin with the crosslinkable rubber. An existing PASA resin is incompatible with a non-degradable resin, limiting its use in a mixture with the non-degradable resin. In contrast, the PASA resin can be used in admixture with the crosslinkable rubber in the biodegradable rubber composition of the present invention because the use of the peroxide crosslinking agent enables co-crosslinking between the PASA resin and the crosslinkable rubber, allowing the biodegradable rubber to have desired physical properties. That is, the co-crosslinking between the PASA resin and the crosslinkable rubber allows the rubber to have physical properties sufficient for practical use.

The peroxide crosslinking agent is selected from the group consisting of, but not limited to, t-butyl peroxyisopropyl carbonate, t-butyl peroxylaurylate, t-butyl peroxyacetate, di-t-butyl peroxyphthalate, t-dibutyl peroxymaleate, cyclohexanone peroxide, t-butyl cumyl peroxide, t-butyl hydroperoxide, t-butyl peroxybenzoate, dicumyl peroxide, 1,3-bis(t-butylperoxyisopropyl)benzene, methyl ethyl ketone peroxide, 2,5-dimethyl-2,5-di(benzoyloxy)hexane, 2,5-dimethyl-2,5-di(t-butylperoxy)hexane, di-t-butyl peroxide, 2,5-dimethyl-2,5-(t-butylperoxy)-3-hexane, n-butyl-4,4-bis(t-butylperoxy)valerate, α,α'-bis(t-butylperoxy)diisopropylbenzene, and mixtures thereof.

For example, an isobutylene-containing rubber such as isobutylene isoprene rubber (IIR) is unsuitable for use as the crosslinkable rubber in the present invention because it is not crosslinked by the peroxide crosslinking agent.

The content of the peroxide crosslinking agent may be 0.01 to 5 parts by weight, preferably 0.1 to 3 parts by weight, more preferably 0.5 to 2 parts by weight, based on the sum of the weights (100 parts by weight) of the crosslinkable rubber and the PASA resin. If the content of the peroxide crosslinking agent is lower than the lower limit, the degree of crosslinking tends to be insufficient. Meanwhile, if the content of the peroxide crosslinking agent exceeds the upper limit, excessive crosslinking may occur, with the result that the elongation is lowered, the function of the rubber is lost, and the cost-effectiveness is disadvantageous.

The biodegradable rubber composition may further include a compatibilizer. The compatibilizer can increase the miscibility between the rubber component and the PASA component to improve the physical properties of the biodegradable rubber composition. Preferably, the compatibilizer is a maleic anhydride (MAH)-grafted rubber. The maleic anhydride grafting can improve the mechanical properties of the biodegradable rubber composition. The grafting rate with maleic anhydride may be in the range of 1 to 10 parts by weight based on 100 parts by weight of the crosslinkable rubber. This range ensures the performance of the compatibilizer.

The rubber component of the maleic anhydride-grafted rubber may be, for example, EPM, EPDM or silicone rubber that has an extremely low compatibility with the PASA resin.

According to one embodiment of the present invention, the biodegradable rubber composition may further include a filler. The filler may be an inorganic or organic filler. Examples of inorganic fillers suitable for use in the present invention include talc, calcium carbonate, zinc carbonate, wollastonite, silica, alumina, magnesium oxide, calcium silicate, sodium aluminate, calcium aluminate, sodium aluminosilicate, magnesium silicate, glass balloons, carbon black, zinc oxide, antimony trioxide, zeolite, hydrotalcite, metal fibers, metal whiskers, ceramic whiskers, potassium titanate, boron nitride, graphite, glass fibers, and carbon fibers. Examples of organic fillers suitable for use in the present invention include naturally occurring polymers such as starch, cellulose microparticles, wood flour, soybean mash, rice husk, wheat bran, and modified products thereof. For higher performance, the filler may be used in admixture with one or more other fillers with different sizes or physical properties. The combined use of the fillers leads to a reduction in porosity to create new physical properties. The physical properties of the fillers can also be imparted to the rubber.

The filler may be present in an amount of 5 to 30 parts by weight, based on the sum of the weights (100 parts by weight) of the crosslinkable rubber and the PASA resin. If the filler is present in an amount of less than 5 parts by weight, the effects (for example, elasticity and strength improvements) provided by the filler may be difficult to expect. Meanwhile, if the filler is present in an amount exceeding 30 parts by weight, the relatively increased proportion of the filler may lead to poor durability or cause poor physical properties of the PASA resin.

The composition may further include an antioxidant, if needed. The antioxidant may be present in an amount of 0.1 to 5% by weight, preferably 10 to 5% by weight, based on its total weight. If the amount of the antioxidant is less than the lower limit, sufficient antioxidant activity of the product cannot be expected. Meanwhile, if the amount of the antioxidant exceeds the upper limit, the physical properties of the product may deteriorate. Thus, it is preferable to limit the amount of the antioxidant to the range of 0.1 to 5% by weight.

The biodegradable rubber composition can be molded into various products. For example, the biodegradable rubber composition may be mixed in a mixer such as a Banbury mixer, kneader or open mill, processed into a sheet in an open mill, and molded by compression molding.

According to one embodiment of the present invention, the biodegradable rubber composition may be compounded with one or more other biodegradable plastics, including poly(butylene adipate-co-terephthalate) (PBAT) and a polyalkylene isosorbide adipate-co-terephthalate (PAIAT), to control its physical properties. The compounded composition can be processed into a more eco-friendly product of great utility.

The presence of the crosslinkable rubber and the PASA (e.g., PBSA) resin makes the biodegradable rubber composition of the present invention highly processable and allows a molded product manufactured from the biodegradable rubber composition to be highly biodegradable in nature and have high strength and durability.

The biodegradable rubber composition of the present invention has a Shore A hardness of 40 to 95, preferably 62 to 85, a tensile strength of at least 60 kg/cm², preferably 75 to 160 kg/cm², an elongation of at least 200%, preferably 400 to 600%, a tear strength of at least 30 kg/cm, preferably 35 to 65 kg/cm, a rebound resilience of at least 40%, preferably 40 to 55%, and a wear resistance (DIN) of 260 or less, preferably 200 or less. Within these ranges, the rubber composition of the present invention can exhibit rubber properties. Meanwhile, outside these ranges, the rubber composition of the present invention may not exhibit rubber properties or have poor durability, making its use difficult.

The biodegradable rubber composition of the present invention may have a biodegradation rate of at least 35% by weight, preferably at least 50% by weight, after 6 months, as measured according to the ISO 14855 standard. Since any test method is not specified for biodegradable rubbers, the biodegradability of the biodegradable rubber composition according to the present invention is measured according to the ISO 14855 standard, which is a test method for the biodegradability of plastics. The biodegradable rubber composition of the present invention has a biodegradation rate of at least 35% by weight. If the biodegradation rate of the biodegradable rubber composition is lower than 35% by weight, the biodegradable rubber composition may not be biodegradable even after a long period of time due to its poor biodegradability.

The present disclosure will be more specifically explained with reference to the following examples. However, these examples are provided for convenience of explanation and are not intended to limit the scope and spirit of the present disclosure.

### EXAMPLES

Biodegradable rubber compositions were prepared using the following raw materials:
Rubber-1: SBR 1502 (Kumho Petrochemical)
Rubber-2: BR 01 (Kumho Petrochemical)
Rubber-3: SBS 3527 (LCY)
Rubber-4: EPDM 4520 (DOW)
Rubber-5: Butyl 268 (isobutylene isoprene rubber, Exxon)
PASA: Solpol 5000 (PBSA, Solchemical)
Compatibilizer: KEPA 1150 (MAH grafted EPDM, Kumho Polychem)
Peroxide: Luperox F (di-(2-t-butylperoxyisopropyl)benzene, ARKEMA)
Filler: N330 (carbon black, OCI)

The rubbers, PASA, compatibilizer, and filler were weighed as shown in Table 1, put in a kneader, and mixed at 100 °C for 10 min. To each of the mixtures was added the peroxide crosslinking agent, followed by mixing for 2 min. The resulting mixture was taken out of the kneader, processed into a 5 mm thick sheet in an open mill, and placed in a 2 mm thick specimen mold. The specimen mold was subjected to compression molding at 185 °C for 5 min and cooled to obtain a 2 mm thick specimen.

The figures given in Tables 1 and 2 represent parts by weight of the raw materials unless otherwise mentioned.

**[Table 1]**

| | Ex. 1 | Ex. 2 | Ex. 3 | Ex. 4 | Comp. Ex. 1 | Ex. 5 | Ex. 6 | Comp. Ex. 2 | Ex. 7 | Ex. 8 |
|---|---|---|---|---|---|---|---|---|---|---|
| Rubber-1 | 40 | - | - | - | - | - | 30 | 25 | 60 | 50 |
| Rubber-2 | - | 40 | - | - | - | - | - | - | - | - |
| Rubber-3 | - | - | 40 | - | - | - | - | - | - | - |
| Rubber-4 | - | - | - | 40 | - | 40 | - | - | - | - |
| Rubber-5 | - | - | - | - | 40 | - | - | - | - | - |
| PASA | 60 | 60 | 60 | 60 | 60 | 60 | 70 | 75 | 40 | 50 |
| Compatibilizer | - | - | - | - | - | 5.0 | - | - | - | - |
| Peroxide | 0.8 | 0.6 | 0.8 | 1.1 | 2.2 | 1.1 | 0.8 | 0.8 | 0.7 | 0.8 |
| Filler | - | - | - | - | - | - | - | - | - | 20 |

The specimen was measured for hardness, tensile strength, elongation, tear strength, and rebound resilience, which are generally used to determine the physical properties of rubbers. An experiment was conducted to determine the biodegradability of the rubber. Since there is no test method for biodegradable rubbers, the test was conducted according to the ISO 14855 standard, which is a test method for biodegradable plastics.

**[Table 2]**

| | Ex. 1 | Ex. 2 | Ex. 3 | Ex. 4 | Comp. Ex. 1 | Ex. 5 | Ex. 6 | Comp. Ex. 2 | Ex. 7 | Ex. 8 |
|---|---|---|---|---|---|---|---|---|---|---|
| Shore A hardness | 72 | 72 | 77 | 70 | Uncrosslinked | 72 | 88 | 99 | 62 | 75 |
| Tensile strength (Kg/cm²) | 115 | 110 | 125 | 77 | - | 115 | 160 | 200 | 95 | 140 |
| Elongation (%) | 500 | 450 | 500 | 550 | - | 500 | 400 | 200 | 600 | 400 |
| Tear strength (Kg/cm) | 50 | 48 | 53 | 35 | - | 50 | 65 | 75 | 45 | 55 |
| Rebound resilience (%) | 45 | 55 | 50 | 50 | - | 52 | 40 | 33 | 55 | 40 |
| Wear resistance (DIN) | 155 | 125 | 145 | 260 | - | 180 | 125 | 125 | 210 | 130 |
| Biodegradability (%) | 55 | 55 | 55 | 55 | - | 53 | 64 | 68 | 36 | 38 |
| Suitability of biodegradable rubber | Suitable | Suitable | Suitable | Suitable | Unsuitable | Suitable | Suitable | Unsuitable | Suitable | Suitable |

The hardness, tensile strength, elongation, tear strength, and rebound resilience were tested according to KS M 6518. The specimen was judged to be "suitable" for rubber use when the Shore A hardness was 40-95, the tensile strength was ≥ 60 kg/cm², the elongation was ≥ 200%, the tear strength was ≥ 30 kg/cm, and the rebound resilience was ≥ 40%. The wear resistance was tested according to KS M ISO 4649. The specimen was judged to be "suitable" for shoe soles when the wear resistance was < 200. There are no special standards for uses other than shoe soles. The biodegradability of the specimen after 6 months was measured according to the ISO 14855 standard. Since biodegradable rubbers have not existed until now, there is no standard for biodegradable rubbers. According to the ISO 14855 standard, a biodegradable plastic is certified to be biodegradable when at least 60% by weight of the biodegradable plastic for 45 days or at least 90% by weight of the biodegradable plastic for 6 months is biodegraded. Here, the biodegradation rate of 90% by weight means that 90% by weight of the plastic is converted to carbon dioxide for 6 months.

The inventive biodegradable rubber does not biodegrade as much as biodegradable plastics, but 50% by weight of the inventive biodegradable rubber degrades in the ground and evaporates into carbon dioxide and the remaining portion (50% by weight) of the inventive biodegradable rubber is broken down into molecules and exists in the soil. A portion of the inventive biodegradable rubber remains undegraded but the soil almost restores its function. Therefore, the inventive biodegradable rubber is of sufficient value.

The above results demonstrate that the composition obtained by mixing the crosslinkable rubber, the PASA resin, and the crosslinking agent is suitable for practical use as a rubber.

Although the particulars of the present invention have been described in detail, it will be obvious to those skilled in the art that such particulars are merely preferred embodiments and are not intended to limit the scope of the present invention. Therefore, the true scope of the present invention is defined by the appended claims and their equivalents.

## Claims

1. A biodegradable rubber composition comprising a polyalkylene succinate adipate (PASA) resin, a peroxide crosslinking agent, and a rubber capable of being crosslinked by the peroxide crosslinking agent.

2. The biodegradable rubber composition according to claim 1, wherein the polyalkylene succinate adipate (PASA) resin is a polybutylene succinate adipate (PBSA) resin.

3. The biodegradable rubber composition according to claim 1, wherein the crosslinkable rubber is selected from the group consisting of natural rubber (NR), styrene butadiene rubber (SBR), butadiene rubber (BR), styrene butadiene styrene (SBS) rubber, nitrile-butadiene rubber (NBR), ethylene-propylene rubber (EPM), ethylene propylene diene monomer (EPDM) rubber, silicone rubber, styrene block copolymer (SBC), 1,2-polybutadiene (1,2-PB), chlorinated polyethylene (CPE), ethylene vinyl acetate rubber (EVM), thermoplastic polyurethane (TPU) elastomer, and mixtures thereof.

4. The biodegradable rubber composition according to claim 1, wherein the polyalkylene succinate adipate resin and the crosslinkable rubber are present in a weight ratio of 80:20 to 30:70.

5. The biodegradable rubber composition according to claim 1, further comprising a compatibilizer.

6. The biodegradable rubber composition according to claim 4, wherein the compatibilizer is a maleic anhydride (MAH)-grafted rubber.
